# EUROPÄISCHE PATENTSCHRIFT

(11) **EP 1 597 110 B1**
(45) Veröffentlichungstag und Bekanntmachung des Hinweises auf die Patenterteilung: **07.05.2008**
(21) Anmeldenummer: 04706660.0
(22) Anmeldetag: 30.01.2004
(51) Int. Cl.: B60N 2/62, B64D 11/06

(54) **SITZ, INSBESONDERE FLUGZEUG- ODER FAHRZEUGSITZ**
SEAT, ESPECIALLY AN AIRPLANE OR VEHICLE SEAT
SIÈGE, NOTAMMENT SIÈGE D'AVION OU DE VÉHICULE MOTEUR

(30) Priorität: 24.02.2003 DE 10308454
(43) Veröffentlichungstag der Anmeldung: 23.11.2005
(73) Patentinhaber: Recaro Aircraft Seating GmbH & Co. KG, 74523 Schwäbisch Hall (DE)
(72) Erfinder: FORGATSCH, Oliver, 71364 Winnenden (DE); SCHÜRG, Hartmut, 74523 Schwäbisch Hall (DE); ACHILLES, Sven, Trophy Club, TX 76262 (US)
(74) Vertreter: Daub, Thomas
(86) Internationale Anmeldenummer: PCT/EP2004/000821
(87) Internationale Veröffentlichungsnummer: WO 2004/074039

(56) Entgegenhaltungen:
- EP-A- 0 216 578
- EP-A- 1 044 877
- DE-A- 4 423 957
- US-A- 3 883 173
- US-A- 4 498 702

## Beschreibung

Die Erfindung betrifft einen Sitz, insbesondere Flugzeug- oder Fahrzeugsitz, mit einem gegenüber einem Boden auf einer Sitzstruktur aufgeständerten Sitzteil, das an seiner Vorderseite mit einem Auflageteil versehen ist gemäß der Merkmalsausgesstaltung des Oberbegriffes des Patentanspruches 1.

Insbesondere auf sehr lang andauernden Reisen, wie sie bei Langstreckenflügen gegeben sind, aber auch bei Schiffspassagen, beispielsweise mittels Fähren, ist es allgemeine Zielsetzung von Flugzeug- oder Fährschiffsausrüstern, den Komfort der Sitzbenutzer und mithin der zu transportierenden Passagiere zu erhöhen. Insbesondere im First- und Business-Class-Bereich haben die Kunden entsprechende Wunschvorstellungen, die zu realisieren sind. Im Trend liegt dabei auch der Wunsch der Passagiere, die Reisezeit zum sinnvollen Ruhen oder zum Schlafen nutzen zu können, um beispielsweise Ermüdungserscheinungen am Zielort bei Langstreckenflügen od. dgl. wirksam zu begegnen.

Durch die DE 100 19 484 A1 ist ein Fahrzeugsitz, insbesondere Fluggastsitz, bekannt mit einem Sitzteil und einer Rückenlehne, die über mindestens eine Einstelleinrichtung relativ zueinander bewegbar gehalten sind. Dadurch, dass bei der bekannten Lösung die jeweilige Einstelleinrichtung mehrere Gelenkstellen aufweist, die zumindest teilweise über ein Stabtragwerk als Sitzstruktur miteinander verbunden sind, das das Sitzteil trägt und das mittels einer Betätigungseinrichtung derart eine Verfahrbewegung ausführt, dass das Sitzteil aus einer Ausgangsposition in weitere zum Ruhen und zum Schlafen dienende Positionen und umgekehrt bewegbar ist, sind in Abhängigkeit von der Anzahl der angebrachten Gelenkstellen und Stabteile des Stabtragwerkes die Anzahl der Bewegungsmöglichkeiten und mithin die Bewegungsfreiheitsgrade für das Sitzteil gegenüber bekannten Lösungen deutlich erhöht, so dass in sehr weit gezogenen Einstellbereichen eine Positionierung des Sitzteils sowie der Rückenlehne möglich ist. Dadurch, dass der bekannte Sitz über eine verschwenkbare Bein- und Fußstütze verfügt, läßt sich dergestalt die Unterseite des Beinbereichs, insbesondere die Unterseite der Oberschenkel eines Sitzbenutzers, entlasten, so dass ein schädlicher, den freien Venenquerschnitt reduzierender Druck und damit die Gefahr von Thrombosen verringert ist. Bereits aufgrund der Preisstruktur dahingehender Sitze sowie im Hinblick auf ihren Platz- und Gewichtsbedarf kommen diese im wesentlichen nur im First- und Business-Class-Bereich zum Einsatz und lassen sich nicht ohne weiteres für die Econorny-Class einsetzen. Des weiteren kann es mit der bekannten Sitzlösung gleichfalls zu einer Belastung der Venen, insbesondere für den Fall kommen, dass der Sitz in einer aufrechten Position (Take-off-Position) ist und die die Venenquerschnitte entlastende Bein- und Fußstütze abgeklappt für eine entsprechende Unterstützung und Entlastung dann nicht zur Verfügung steht.

Durch die DE-A-44 23 957 ist ein Fahrzeugsitz mit einem Sitzteil-Polsterträger bekannt, der mit einer den Vorderteil des Sitzteilpolsters tragenden Schenkelstütze versehen ist, deren Höhe und Neigung relativ zum Sitzteil-Polsterträger mittels einer Einstelleinrichtung in Form eines Bowdenzuges veränderbar ist, wobei die eigentliche Schenkelstütze in ihrer Bewegungsrichtung schwingfähig über mindestens eine Druckfeder auf dem Sitzteil-Polsterträger permanent abgestützt ist und die Einstelleinrichtung in Form des Bowdenzuges begrenzt entgegen der Wirkung der Druckfeder den Schwingungsbereich nur nach oben hin. Aufgrund des erhöhten Auflagedruckes bedingt durch die permanent angreifende Druckfeder an der bewegbaren Sitzteilvorderkante ist nicht auszuschließen, dass es hier bei empfindlichen Personen zur schädlichen Druckeinleitung innerhalb des Beinbereiches des Sitzbenutzers kommt.

Durch die EP-A-0 216 578 ist ein Sitz vorzugsweise in der Ausgestaltung eines Bürostuhls bekannt, bei dem man die Sitzstruktur schwächende Einschnitte insbesondere im Bereich der Sitzteilvorderkante vorsieht, um dergestalt über die Materialschwächung unter der Beinauflagelast eines Sitzbenutzers zur Komforterhöhung die Sitzteilvorderkante mit elastischer Rückstellkraft nach unten hin abzuwinkeln. Die dahingehend bekannte Bürostuhllösung wäre aufgrund der reduzierten Festigkeit bezogen auf die Sitzstruktur oder das Sitzteil selbst für einen Einsatz als Fahrzeug- oder Fluggastsitz nicht geeignet, da insbesondere die bei einem etwaigen Crashfall auftretenden Kräfte dergestalt nicht mehr beherrschbar wären und die ansonsten steif und massiv ausgebildete Sitzteilvorderkante ist nicht geeignet, wirksam einer möglichen Thrombosegefahr zu begegnen, wie sie insbesondere bei längeren Flugreisen auftritt.

Durch die US-A-4 498 702 ist es bei einer vergleichbaren Bürostuhlanordnung bekannt, im Sinne des Oberbegriffs des Patentanspruches 1 ein gegenüber einem Boden auf einer Sitzstruktur aufgeständertes Sitzteil vorzusehen, das an seiner Vorderseite mit einem Auflageteil versehen ist, wobei das Auflageteil flexibel gestaltet ist und bei einer vorgebbaren Sitzlast (F) in Richtung der Sitzstruktur gegen mindestens eine Abstützstelle derselben bewegbar ist und bei Entlastung sich in umgekehrter Richtung von der jeweiligen Abstützstelle der Sitzstruktur unter Herstellen eines freien Abstandes weg in seine Ausgangsstellung zurückbewegt. Bei der bekannten Lösung ist am Sitzboden des Sitzteils auf dessen Oberseite als Abstützstelle ein mittig angeordneter, unterhalb des Sitzteils vorstehender und nach vorne gekrümmter Auffanghaken vorgesehen, gegen den die Sitzvorderkante mit dem Polstermaterial entgegen der Wirkung zweier randseitig angeordneter Biegefedern unter der Beinauflagelast des Sitzbenutzers wegbewegbar ist. Auch diese bekannte Bürostuhlanwendung wäre aufgrund ihrer geringen Festigkeit wenig geeignet, die geforderten Festigkeitswerte im möglichen Crashfall bei Flugzeugen oder Fahrzeugen einzuhalten. Insbesondere fehlt eine wirksame Abstützung im Bereich der Sitzteilvorderkante zwischen mittig angeordnetem Abstützhaken und randseitig angeordneten Biegefedern.

Ausgehend von diesem Stand der Technik liegt der Erfindung die Aufgabe zugrunde, einen Sitz, insbesondere Flugzeug- oder Fahrzeugsitz, zu schaffen, der allumfassend einsetzbar ist und der die beschriebenen Nachteile im Stand der Technik nicht aufweist, insbesondere die Gefahr von Thrombosen bei lang andauernden Reisen vermeiden hilft. Eine dahingehende Aufgabe löst ein Sitz mit den Merkmalen des Patentanspruches 1 in seiner Gesamtheit.

Dadurch, dass gemäß dem kennzeichnenden Teil des Patentanspruches 1 die eine jeweilige Abstützstelle bildende Sitzstruktur einen Abstützholm bildet, der zumindest auf seiner, dem Auflageteil zugewandten Seite konvex ausgebildet ist und derart zumindest eine relative Gleitbewegung zwischen Auflageteil und Abstützholm erlaubt, ist ein Sitz geschaffen, dessen vorderer Bereich flexibel gehalten ist, so dass in Abhängigkeit von der jeweiligen Sitzlast, ausgeübt durch den Sitzbenutzer, der vordere Bereich des Sitzteils nachgibt und dergestalt die Druckkräfte auf die Unterseite der Oberschenkel des Sitzbenutzers reduziert mit der Folge, dass die Venenquerschnitte in diesem Bereich nicht verringert werden, sondern deren Querschnitt erhalten bleibt wiederum mit der Folge, dass die Blutzirkulation nicht gestört wird und somit das Risiko einer Thrombose sich deutlich reduziert. Mit der erfindungsgemäßen Lösung ist mithin eine maximale Auflagefläche der Oberschenkel in jeder Sitzposition erreicht bei Vermeidung von Druckkräften vor allem im vorderen Bereich der Unterseite der Oberschenkel, und des weiteren sind auch an dieser, also an der Unterseite der Oberschenkel schädliche Scherkräfte vermieden. Die dahingehenden, zu reduzierenden Scherkräfte entstehen insbesondere im Bereich der Oberschenkel in zurückgelehnter Sitzposition gegenüber einer aufrechten Sitzposition (Take-off-Position), bei der ein stärker angestellter Sitzwinkel erforderlich ist. Gerade dieser größere Sitzwinkel bewirkt aber beim Ausstrecken der Beine (Slough-Position) eine Erhöhung des Druckes auf die Unterseite der Oberschenkel mit der bereits beschriebenen Gefahr der Erhöhung des Thrombose - Risikos für den Sitzbenutzer. Durch die Nachgiebigkeit des vorderen Bereiches des Sitzteils ist gerade das Auftreten dahingehender Scherkräfte mit Sicherheit vermieden. Hierzu trägt insbesondere die relative Gleitbewegung zwischen Auflageteil und Abstützholm mit bei, bei dem leicht und gleichmäßig das Auflageteil sich unter der Beinauflagekraft entlang der konvexen Seite des Abstützhol mes nach unten bewegt.

Ein dahingehender "Gesundheitssitz" kann auch im Kraftfahrzeugbereich, beispielsweise für Omnibusse, eingesetzt werden; weitere Anwendungen sind aber auch denkbar im Bereich von medizinischen Behandlungsstühlen, auch im Bereich der Zahnmedizin. Des weiteren erhöht sich der Sitzkomfort auch für solche Sitze, die mit schwenkbaren Bein- und Fußauflagen zur Entlastung der Unterseite der Oberschenkel bereits ausgerüstet sind. Auch dergestalt läßt sich noch weiter der Komfort für dahingehende Sitze - jedenfalls in der aufrechten Sitzposition - erhöhen.

Bei einer bevorzugten Ausführungsform des erfindungsgemäßen Sitzes ist das flexible Auflageteil in der Art einer Biegefeder ausgebildet, die mit einem Ende frei bewegbar ist und mit ihrem anderen Ende an Teilen des Sitzteils und/oder der Stützstruktur festgelegt ist. Sofern die dahingehende Biegefeder in der Art einer Rechteck-Blattfeder ausgebildet ist, kann diese als belasteter freier Träger betrachtet werden, wobei die Biegespannung deren Höchstwerte an der Einspannstelle einnimmt, die mit wachsendem Abstand von dieser gleichmäßig abnimmt. Vorzugsweise ist dabei das Auflageteil in seiner flexiblen Ausgestaltung aus einem thermoplastischen Kunststoff, vorzugsweise jedoch aus einem Faserverbundwerkstoff, insbesondere einem Faserverbundgelege gebildet, das weiter vorzugsweise einstückiger Bestandteil einer Sitzschale ist, die das Schaumkissen des Sitzteils trägt und dergestalt zum Sitzkomfort für den Sitzbenutzer mit beiträgt.

Weitere vorteilhafte Ausgestaltungen sind Merkmale der sonstigen Unteransprüche.

Im folgenden wird der erfindungsgemäße Sitz anhand eines Ausführungsbeispiels nach der Zeichnung näher erläutert. Dabei zeigen in prinzipieller und nicht maßstäblicher Darstellung die
- Fig. 1 und 2: jeweils eine Seitendarstellung auf das Sitzteil, einmal ohne Lasteinleitung, einmal mit Lasteinleitung, dargestellt durch den Kräftepfeil F;
- Fig.3: in Übereinanderanordnung eine der Fig.1 bzw. 2 entsprechende perspektivische Darstellung und die
- Fig.4: gleichfalls in Übereinanderanordnung eine perspektivische Darstellung gemäß der Darstellung nach der Fig.3 ohne Schaumkissen.

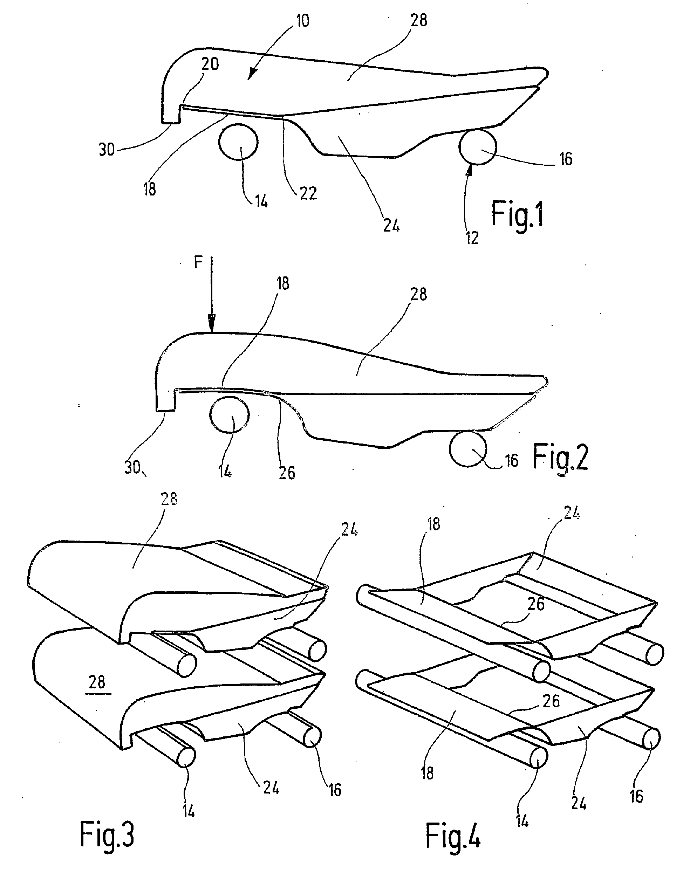

Der erfindungsgemäße Sitz ist insbesondere als Flugzeugsitz, vorzugsweise als Fluggastsitz, ausgebildet. Gemäß der Darstellung nach der Fig.1 ist dort in einer Seitendarstellung im wesentlich nur das als Ganzes mit 10 bezeichnete Sitzteil des Gesamtsitzes gezeigt. Insbesondere wurde aus Vereinfachungsgründen auf die Darstellung der Rückenlehne und/oder etwaiger Fuß- und Beinauflagen verzichtet. Das dahingehende Sitzteil 10 ist gegenüber einem nicht näher dargestellten Fahrzeug- oder Flugzeug-Kabinenboden über eine Sitzstruktur 12 in der Höhe entsprechend aufgeständert. Von der eigentlichen Sitzstruktur 12 sind gemäß der Darstellung nach der Fig.1 nur die beiden oberen Querholme in der Art von Abstützholmen 14,16 dargestellt. An seiner Vorderseite im Bereich des vorderen Abstützholmes 14 weist das Sitzteil 10 ein flexibel gestaltetes Auflageteil 18 auf, das bei einer vorgebbaren Sitzlast F (vgl. Pfeildarstellung Fig.2) sich in Richtung der Sitzstruktur 12, insbesondere in Form des vorderen Abstützholmes 14, bewegt. Bei entsprechender Entlastung kehrt mithin das flexible Auflageteil 18 aus seiner in der Fig.2 gezeigten Stellung in umgekehrter Richtung in seine Ausgangsstellung nach der Fig.1 zurück, bei der die Unterseite des Auflageteils 18 einen vorgebbaren Abstand zu der Oberseite des vorderen Abstützholmes 14 einnimmt, wobei der dahingehende Abstand nicht über die gesamte Breite des Auflageteils 18 gewährleistet sein muß, sondern es vorzugsweise genügen kann, den dahingehenden Abstand im Bereich der Auflage der Unterseite der Oberschenkel eines Sitzbenutzers sicherzustellen, was im folgenden noch näher erläutert werden wird.

Das flexible Auflageteil 18 ist in der Art einer Biegefeder ausgebildet, die mit einem Ende 20 frei bewegbar ist und mit ihrem anderen Ende 22 an Teilen des sonstigen Sitzteils 10, wie in den Figuren dargestellt, und/oder alternativ auch an Teilen der Sitzstruktur 12 festgelegt sein kann. Des weiteren ist für den Erhalt der genannten Biege- oder Blattfedercharakteristik das Auflageteil 18 in der Art einer biegsamen Auflageplatte ausgebildet und kann beispielsweise aus einem Blechwerkstoff bestehen. Aus sicherheitstechnischen Gründen sowie aus Gründen der Gewichtsersparnis besteht jedoch vorzugsweise die genannte Auflageplatte aus einem thermoplastischen Kunststoffmaterial, wobei es sich jedoch als besonders günstig erwiesen hat, das Auflageteil 18 aus einem Faserverbundwerkstoff zu bilden, beispielsweise in Form eines Faserverbundgeleges aus Kohlefaser, Kevlar od. dgl.. Auch können metallische Blattfederteile in den Faserverbund zur Unterstützung mit einlaminiert werden.

Als besonders vorteilhaft hat es sich aus produktionstechnischer Sicht jedoch erwiesen, das Auflageteil 18 als einstückigen Bestandteil der eigentlichen Sitzschale 24 zu bilden. Die dahingehende Sitzschale 24 ist insbesondere in der Fig.4 in perspektivischer Draufsicht gezeigt und bei der einstükkigen Ausbildung verläuft das plattenartige Auflageteil 18 entlang der vorderen Querseite 26 der Sitzschale 24. Die dahingehende Sitzschale 24 dient insbesondere der Aufnahme eines den Komfort erhöhenden Schaumkissens 28, das vorzugsweise aus einem nicht brennbaren Polyurethanschaum besteht. Wie des weiteren die Fig.1 bis 3 zeigen, übergreift das Schaumkissen 28 mit einem nasenartigen Vorsprung 30 das biegbare Auflageteil 18 entlang seinem vorderen Ende 20, so dass das Auflageteil 18 im wesentlichen integraler Bestandteil einer Ausnehmung, verlaufend an der Unterseite des Polyurethanschaumkissens 28, ist.

Um einen relativen Längenausgleich zwischen Schaumkissen 28 und Aufnahmeteil 18 zu erreichen, liegt im Bereich des Auflageteils 18 das Schaumkissen 28 dort nur auf und ist ansonsten in der Sitzschale 24 aufgenommen. Auf der gegenüberliegenden Seite des Übergriffes des Schaumkissens 28 am Auflageteil 18 kann sich dieses bei entsprechender Kraftbelastung (Kraftpfeil F) mit seiner Unterseite an der Oberseite einer Abstützstelle abstützen, gebildet durch den quer verlaufenden vorderen Abstützholm 14. Die genannte Abstützstelle kann entgegen der zeichnerischen Darstellung nach der Fig.2 gebildet sein durch die gesamte Auflagefläche der Oberseite des vorderen Abstützholmes 14; es besteht aber auch die Möglichkeit, quer zu dem vorderen Abstützholm 14 verlaufend das plattenartige Auflageteil 18 in Richtung seiner Mitte mit einer zunehmenden Wölbung zu versehen mit der Folge, dass in diesem Bereich die Federsteifigkeit des Auflageteils 18 am größten ist und nach außen hin zu den Auflagestellen am vorderen Abstützholm 14 abnimmt. Somit besteht eine besonders sanfte Krafteinleitung, da in Abhängigkeit der Sitzbelastung bedingt durch die Oberschenkelauflage zu beiden Enden des vorderen Abstützholms 14 hin eine Abgleitbewegung erfolgt. Auch besteht die Möglichkeit alternativ oder zusätzlich die gewünschte Mittenwölbung über die Ausgestaltung des vorderen Abstützholmes 14 zu erreichen.

Des weiteren ist in Blickrichtung auf die Fig.2 gesehen im belasteten Zustand das Auflageteil 18 leicht gekrümmt verlaufend angeordnet, so dass dergestalt im Bereich der Auflage bzw. der Abstützung eine relative Gleitbewegung zwischen Auflageteil 18 und vorderem Abstützholm 14 in Längsrichtung des Stützteils 10 erreicht ist. Der dahingehende Krümmungsverlauf im belasteten Zustand wird, wie dies die Fig.2 des weiteren zeigt, in den vorderen Wandbereich der Sitzschale 24 mit aufgenommen, so dass es dergestalt zu einer harmonischen Krafteinleitung im Bereich des Übergangs 26 von Auflageteil 18 zu Sitzschale 24 kommt.

Die Sitzstruktur 12 weist des weiteren einen hinteren Abstützholm 16 auf, der gleichfalls quer zum Sitzteil 10 verläuft, und zwar entlang seinem hinteren Ende, wobei über diesen weiteren Abstützholm 16 das Sitzteil 10 fest mit der Sitzstruktur 12 verbunden ist. Sofern man für eine Sitzeinstellbewegung aber erreichen möchte, dass das Sitzteil 10 sich relativ gegenüber der feststehenden Sitzstruktur 12 mit ihren beiden Abstützholmen 14,16 bewegt, wäre über eine entsprechende Seitenführung (nicht dargestellt) dies gleichfalls erreichbar, und zwar ohne die Funktion des federnden Auflageteils 18 zu beeinträchtigen. Wie des weiteren die Fig.1 zeigt, bildet in unbelastetem Zustand das Auflageteil 18 eine in Richtung der Sitzvorderkante ansteigende Fläche aus, was für den Sitzbenutzer insbesondere in der Take-off-Phase bei aufgestellter Rückenlehne einen guten Halt bietet. Zumindest über die Oberseite des Polyurethanschaumkissens 28 wird die dahingehende ansteigende Fläche des Sitzteils 10 beibehalten, selbst wenn gemäß der Darstellung nach der Fig.2 aufgrund der Oberschenkelbelastung das Auflageteil 18 sich absenkt zwecks Abstützen an der Oberseite des vorderen Abstützholmes 14.

Die flexible Vorderkante des erfindungsgemäßen Sitzes hat den Vorteil, dass mithin bei relativ geringer Schaumdicke des Schaumkörpers 28, was der Gewichtsreduzierung zugute kommt, ein hoher Grad an Anpassung für den Sitzbenutzer gewährleistet ist. Aufgrund der biegsamen Nachgiebigkeit des Auflageteils 18 sind Scherkräfte im Bereich der Oberschenkel auch in zurückgelehnter Sitzposition deutlich reduziert und im übrigen sind die Venenquerschnitte entsprechend entlastet, so dass das Thromboserisiko deutlich sinkt.

## Patentansprüche

1. Sitz, insbesondere Flugzeug- oder Fahrzeugsitz, mit einem gegenüber einem Boden auf einer Sitzstruktur (12) aufgeständerten Sitzteil (10), das an seiner Vorderseite mit einem Auflageteil (18) versehen ist, wobei das Auflageteil (18) flexibel gestaltet ist und bei einer vorgebbaren Sitzlast (F) in Richtung der Sitzstruktur (12) bewegbar ist und bei Entlastung sich in umgekehrter Richtung von der Sitzstruktur (12) weg in seine Ausgangsstellung zurückbewegt, **dadurch gekennzeichnet, dass** die eine jeweilige Abstützstelle bildende Sitzstruktur (12) einen Abstützholm (14) bildet, der zumindest auf seiner, dem Auflageteil (18) zugewandten Seite konvex ausgebildet ist und derart zumindest eine relative Gleitbewegung zwischen Auflageteil (18) und Abstützholm (14) erlaubt.

2. Sitz nach Anspruch 1, **dadurch gekennzeichnet, dass** das flexible Auflageteil (18) in der Art einer Biegefeder ausgebildet ist, die mit einem Ende (20) frei bewegbar ist und mit ihrem anderen Ende (22) an Teilen des sonstigen Sitzteils (10) und/oder der Sitzstruktur (12) festgelegt ist.

3. Sitz nach Anspruch 2, **dadurch gekennzeichnet, dass** für den Erhalt der Biegefedercharakteristik das Auflageteil (18) in der Art einer biegsamen Auflageplatte aus Blechwerkstoff und/oder aus thermoplastischem Kunststoffmaterial und/oder aus einem Faserverbundwerkstoff gebildet ist.

4. Sitz nach einem der Ansprüche 1 bis 3, **dadurch gekennzeichnet, dass** das Auflageteil (18) einstückiger Bestandteil einer Sitzschale (24) ist, die das Schaumkissen (28) des Sitzteils (10) trägt und wobei das Schaumkissen (28) das Auflageteil (18) auf seiner einen Seite übergreift und das auf der gegenüberliegenden anderen Seite die Sitzstruktur (12) mindestens die Abstützstelle für das Auflageteil (18) bildet.

5. Sitz nach einem der Ansprüche 1 bis 4, **dadurch gekennzeichnet, dass** das Auflageteil (18) und/oder der Abstützholm (14) derart eine Wölbung aufweisen, dass zu den beiden freien Enden des einen Abstützholms (14) dort eine Auflagestelle gebildet ist und dass unter der Stützlast die bestehende Wölbung zwischen den beiden Auflagestellen sich verringert.

6. Sitz nach einem der Ansprüche 1 bis 5, **dadurch gekennzeichnet, dass** die Sitzstruktur (12) einen Abstützholm (16) aufweist, der quer zum Sitzteil (10) an seinem hinteren Ende verläuft und dass über diesen weiteren Abstützholm (16) das Sitzteil (10) fest mit der Sitzstruktur (12) verbunden ist oder dass zumindest der Abstützholm (14) als eine Art Gleitlager die Relativbewegung zwischen Sitzteil (10) und Sitzstruktur (12) erlaubt.

7. Sitz nach einem der Ansprüche 1 bis 6, **dadurch gekennzeichnet, dass** im unbelasteten Zustand das Auflageteil (18) eine in Richtung der Sitzvorderkante ansteigende Fläche ausbildet, die im voll belasteten Zustand parallel zum Boden verläuft oder eine zum Boden gerichtete Krümmung aufweist.

## Claims

1. Seat, in particular an airplane or vehicle seat, with a seat part (10) erected on a seat structure (12) positioned upright on the floor, the seat part (10) being equipped with a support part (18) at its front, whereby the support part (18) is designed in a flexible way and can be moved in the direction of the seat structure (12) when a pre-determined seat load (F) is applied, and moves back into the opposite direction away from the seat structure (12) into its starting position when the load is removed, **characterised in that** the seat structure (12) forming the relevant support point forms a support beam (14) formed in a convex fashion at least on its side facing the support part (18) and allowing at least a relative sliding movement between the support part (18) and the support beam (14) in this way.

2. Seat according to Claim 1, **characterised in that** the flexible support part (18) is formed in the way of a bending spring, one end (20) of which is freely moveable, and the other end (22) of which is affixed to parts of the other seat part (10) and/or the seat structure (12).

3. Seat according to Claim 2, **characterised in that** the support part (18) is formed in the way of a bendable support plate made from a sheet metal material and/or a thermoplastic plastic material and/or a fibre compound material for realising the bending spring characteristics.

4. Seat according to one of the Claims 1 to 3, **characterised in that** the support part (18) consists of a single-piece component together with a seat shell (24), which supports the foam cushion (28) of the seat part (10), and whereby the foam cushion (28) straddles the support part (18) on its one side, and **in that** the seat structure (12) forms at least one support point for the support part (18) on the opposite side.

5. Seat according to one of the Claims 1 to 4, **characterised in that** the support part (18) and/or the support beam (14) comprise (s) a bead in such a way that a support point is formed at both free ends of the first support beam (14), and **in that** the said bead between the two support points is reduced under the supported load.

6. Seat according to one of the Claims 1 to 5, **characterised in that** the seat structure (12) comprises a support beam (16) extending transverse to the seat part (10) at its rear end, and **in that** the seat part (10) is firmly connected with the seat structure (12) via this further support beam (16), or **in that** the support beam (14) at least allows a relative movement between the seat part (10) and the seat structure (12) in the way of a sliding bearing.

7. Seat according to one of the Claims 1 to 6, **characterised in that** the support part (18) forms a surface that rises in the direction of the seat front edge when no load is applied, and that extends parallel with the floor when fully loaded, or forms an arc in the direction of the floor.

## Revendications

1. Siège, notamment siège d'avion ou de véhicule moteur, comprenant une partie d'assise (10) supportée sur une structure de siège (12) par rapport à un fond et munie sur son côté avant d'une partie de support (18), la partie de support (18) étant flexible et pouvant, sous l'effet d'une charge d'assise (F) prédéfinie, être déplacée dans la direction de la structure de siège (12) et se déplaçant, sous l'effet d'une décharge, dans le sens inverse en s'éloignant de la structure de siège (12) pour revenir à sa position de départ, **caractérisé en ce que** la structure de siège (12), constituant un point d'appui respectif, forme un longeron d'appui (14) qui a une configuration convexe, du moins sur son côté tourné vers la partie de support (18), de manière à permettre au moins un mouvement de glissement relatif entre la partie de support (18) et le longeron d'appui (14).

2. Siège selon la revendication 1, **caractérisé en ce que** la partie de support (18) flexible est réalisée à la manière d'un ressort de flexion librement mobile par une extrémité (20) et fixé en position par son autre extrémité (22) sur des éléments du reste de la partie d'assise (10) et/ou de la structure de siège (12).

3. Siège selon la revendication 2, **caractérisé en ce que** pour l'obtention de la caractéristique du ressort de flexion, la partie de support (18) est formée à la manière d'une plaque d'appui flexible en acier et/ou en un matériau plastique thermoplastique et/ou en un matériau composite renforcé par des fibres.

4. Siège selon l'une des revendications 1 à 3, **caractérisé en ce que** la partie de support (18) fait partie intégrante d'une coque de siège (24) qui porte le coussin en mousse (28) de la partie d'assise (10), le coussin en mousse (28) recouvrant et dépassant la partie de support (18) sur un de ses côtés, et la structure de siège (12) constituant, sur l'autre côté opposé, au moins le point d'appui de la partie de support (18).

5. Siège selon l'une des revendications 1 à 4, **caractérisé en ce que** la partie de support (18) et/ou le longeron d'appui (14) présentent un bombement de manière à former, à cet emplacement, un point d'appui par rapport aux deux extrémités libres du premier longeron d'appui (14) et **en ce que** le bombement entre les deux points d'appui diminue sous la charge d'appui.

6. Siège selon l'une des revendications 1 à 5, **caractérisé en ce que** la structure de siège (12) a un longeron d'appui (16) s'étendant transversalement par rapport à la partie d'assise (10), au niveau de l'extrémité arrière de celle-ci, et **en ce que** la partie d'assise (10) est reliée solidairement à la structure de siège (12) par cet autre longeron d'appui (16) ou **en ce qu'**au moins le longeron d'appui (14) permet, à la manière d'un palier lisse, le mouvement relatif entre la partie d'assise (10) et la structure de siège (12).

7. Siège selon l'une des revendications 1 à 6, **caractérisé en ce qu'**à l'état non chargé, la partie de support (18) forme une surface en pente ascendante dans la direction du bord avant du siège, surface qui, à l'état complètement chargé, s'étend parallèlement au fond ou présente une courbure orientée vers le fond.
